Europäisches Patentamt

European Patent Office

Office européen des brevets

(11) Publication number: **0 091 235**
A2

# EUROPEAN PATENT APPLICATION

(21) Application number: **83301641.3**

(22) Date of filing: **24.03.83**

(51) Int. Cl.³: **B 29 F 3/04**

(30) Priority: **03.04.82 GB 8209978**

(43) Date of publication of application:
**12.10.83 Bulletin 83/41**

(84) Designated Contracting States:
**AT BE CH DE FR GB IT LI LU NL SE**

(71) Applicant: **Polyolefine Fibres & Engineering Company Limited**
**126, Millshaw, Beeston Ring Road**
**Leeds West Yorkshire LS11 8DA(GB)**

(72) Inventor: **Slack, Philip Trevor**
**Upper Rooks Hall Norwood Green Hill Lightcliff**
**Halifax West Yorkshire(GB)**

(74) Representative: **Oulton, Richard John et al,**
**H.L. Cottrell & Co. 22, Whitefriargate**
**Hull North Humberside HU1 2EX.(GB)**

(54) Improvements in or relating to die heads for extruding plastics materials.

(57) The die head (11) includes an inlet (19) for receiving a continuous supply of plastics material to be extruded, and a duct distribution system (21 - 43) for directing said material from said inlet to an extrusion outlet or outlets of the head; and is characterised in that the duct distribution system forms a "family tree" system arranged to direct said plastics material supplied to said inlet to spaced apart locations adjacent said outlet or outlets via paths of substantially equal lengths.

FIG.1

EP 0 091 235 A2

"IMPROVEMENTS IN OR RELATING TO DIE
HEADS FOR EXTRUDING PLASTICS MATERIALS"

DESCRIPTION

This invention relates to an annular extrusion die head including an inlet for receiving a continuous supply of plastics material to be extruded, and a duct distribution system for directing said material from said inlet to an extrusion outlet or outlets of the head, and has particular application to a die head for extrusing plastics material in fibre, filament, ribbon, or tubular form.

A difficulty well recognised in the extrusion of plastics material in that, to be flowable, the plastics material must be at elevated temperature and at elevated temperature the material degenerates. If a die head is to produce articles of uniform characteristics it is essential that the degeneration in the material supplied to the extrusion plate of the die head be as uniform as possible.

This inherent difficulty has led to the development of the elongate die head for making fibre, filament, ribbon, and sheet material and in which plastics material received from an extruder is ducted by paths of substantially equal length to different points along the length of an elongate die plate. The ducting system may be in the form of a "family tree", such a structure being described in the U.S. Patent specification 4017240, or the material may be ducted from the inlet via tubular ducts of equal length and cross-section which open at spaced apart points along the extrusion plate, such a construction being published in the German Offenlegungsschrift 2105756.

Such die heads include heaters to maintain the die head at a substantially uniform temperature but, due to their elongate block-like configuration, there is an inherent difficulty in maintaining the die head at the desired constant temperature and the heating arrangements are complex, costly and expensive to operate and control.

A further inherent difficulty with elongate die heads resides in the fact that with the limitations on material residence time and the problems of maintaining the die head at constant uniform temperature there is an optimum length to an elongate die head. As the physical dimensions of an elongate die head are limited by practical considerations there is a limit to the production capability of each die head and, in practice, it frequently happens that a plurality of die heads must be operated simultaneously to achieve a desired production rate, with the inherent disadvantage that the die heads must be "tuned" to produce extrusions of relatively uniform characteristics.

It is also well known in the art to produce a tubular extrusion, in film or rigid form, from an annular die head which conveniently comprises a solid core supported in an annular die body, the core and body defining therebetween a conical chamber opening to an annular chamber, the lower regions of which define an annular extrusion opening. That end of the core within the die body is generally conical, the die body presents a conical surface facing the conical head of the core and spaced therefrom, and the material inlet opens to the conical chamber between said conical surfaces so that the material supplied by the inlet, concentric to said annular chamber, flows outwardly in passing through said conical chamber and therefrom flows in the axial direction of the said annular chamber to the annular extrusion opening.

It is known to provide annular ribs, and the like obstruc-

- 3 -

tions to flow, in the annular chamber, to encourage circumferential flows within the annular chamber and thereby establish a uniform circumferential pressure at said extrusion opening, and the design and configurations of the flow passages through the annular chamber are well known in the art.

The annular die heads described above suffers from the inherent defect that the obstructions to flow in the annular chamber, generate a substantial pressure difference in the axial direction of said chamber and thus, to obtain a uniform extrusion, pressure in the region of 400lbs. per square inch and often exceeding 3,000lbs. per square inch is common in the art and the very high inlet pressures require very specialised and expensive material supply means. Further, the core must be supported from the die body by radial ribs, which must be substantial in view of the material pressures acting on the conical end thereof, and as the material flows in contact with and adjacent the ribs are at a slower rate than the material flows more remote from the ribs, said material flows in contact with and adjacent the ribs suffer a greater degeneration than the other material flows and, downstream of the ribs, the uniting streams blend together but do not intermix and such blend planes become evident in the extruded article as so-called "weld-lines", which detract from the general appearance of the article.

A further inherent disadvantage of conventional elongate and annular die heads in that such die heads can only process one material at a time.

The present invention seeks to provide a die head for producing fibre, filament, ribbon, or tubular extrusions, which does not have the severe size limitations of the elongate die head constructions or the degeneration variations of the conventional annular die head.

According to the present invention there is provided an annular extrusion die head including an inlet for receiving a continuous supply of plastics material to be extruded, and a duct distribution system for directing said material from said inlet to an extrusion outlet or outlets of the head, characterised in that, the the duct distribution system is arranged to direct said plastics material supplied to said inlet to spaced apart locations adjacent said outlet or outlets via paths of substantially equal lengths.

In one embodiment in accordance with the invention an annular die head comprises an annular die body with an annular core supported therein, the core and die body presenting annular surfaces in contacting relationship, and the said duct distribution system is formed in an external surface of the core, an internal surface of the die body, or partially in said core and said die body.

Preferably said duct distribution system is formed on, or in, an annular body within the die head.

In one embodiment in accordance with the invention said annular body comprises a plurality of annular elements in concentric relationship whilst, in another embodiment, said annular body comprises a plurality of annular elements in stacked relationship.

In one embodiment in accordance with the invention the die head includes a plurality of separate, and independent, duct distribution systems.

When a plurality of duct distribution systems are provided for a die head intended to manufacture tubular articles each duct distribution system discharges through an extrusion slot individual thereto.

In a preferred embodiment in accordance with the invention said annular extrusion slots are spaced apart in the axial direction of the die head in such manner that a first extrusion slot extrudes a tubular article and each extrusion slot downstream therefrom extrudes an annular layer of material onto the tubular article supplied thereto so that, in the event of the die head including three annular extrusion slots, a tubular article comprising three concentric layers of material can be formed.

When the die head includes an extrusion plate, with openings therethrough defining the cross-section for the different extrusions, each duct distribution system preferably discharge to an area or areas of said plate individual thereto.

In one embodiment of the invention the different duct distribution systems discharge through different areas of the extrusion plate in the circumferential direction of said plate whilst, in other embodiments of the invention, the different distribution systems discharge to different concentric areas of the extrusion plate.

It will be appreciated that, as each duct distribution system can be supplied with flowable material, the characteristics of the materials supplied to the duct distribution system may differ or the pressures in the different duct distribution systems may differ and whereby, from one die head, different products can be produced, for example fibre, filaments, tape, continuous angle, and/or continuous "T" extrusions may be obtained from the same extrusion plate.

Preferably the die head is of annular configuration, whereupon said core may include heating means for the die head or may form a passage for cooling, and/or pressure air for release within, and generally concentric with, the extrusion from the extrusion plate or the extrusion slot or slots.

Preferably the plastics material from the, or each, duct distribution system passes through a static mixer before passing to the extrusion opening or openings.

The invention will now be described further by way of example with reference to the accompanying drawings in which:-

Fig. 1 shows a cross-section through an annular die head in accordance with the invention on the line II-II in Fig. 2,

Fig. 2 shows an underneath plan view of the die head illustrated in Fig. 1,

Fig. 3 shows one duct distribution system for use with the die head of Figs. 1 and 2 and,

Fig. 4 shows, in underneath plan view, four different examples of extrusion openings which may be formed in the extrusion plate of the die head of Figs. 1 and 2,

Fig. 5 shows, in axial cross-section similar to Fig. 1, an alternative die head construction,

Fig. 6 shows, in axial cross-section, one arrangement for the annular body within the die head of Fig. 5,

Fig. 7 shows, in exploded axial cross-section, an alternative annular body arrangement for the Fig. 5 die head, the cross-section being in the same plane as the Fig. 5 cross-section,

Fig. 8 shows a plan view of that half of the upper plate shown in the cross-section in Fig. 7,

Fig. 9 shows a plan view of that half of the next to upper plate shown in cross-section in Fig. 7,

Fig. 10 shows a plan view of that half of the next to bottom plate shown in cross-section in Fig. 7,

Fig. 11 shows a plan view of that half of the lower plate shown in cross-section in Fig. 7,

Fig. 12 shows, in cross-section, a third form for an annular die head,

Fig. 13 shows, in axial cross-section, a fourth arrangement for an annular die head,

Fig. 14 shows, in axial cross-section, a fifth embodiment for an annular die head and,

Fig. 15 shows an axial cross-section through one air distribution system for an annular die head.

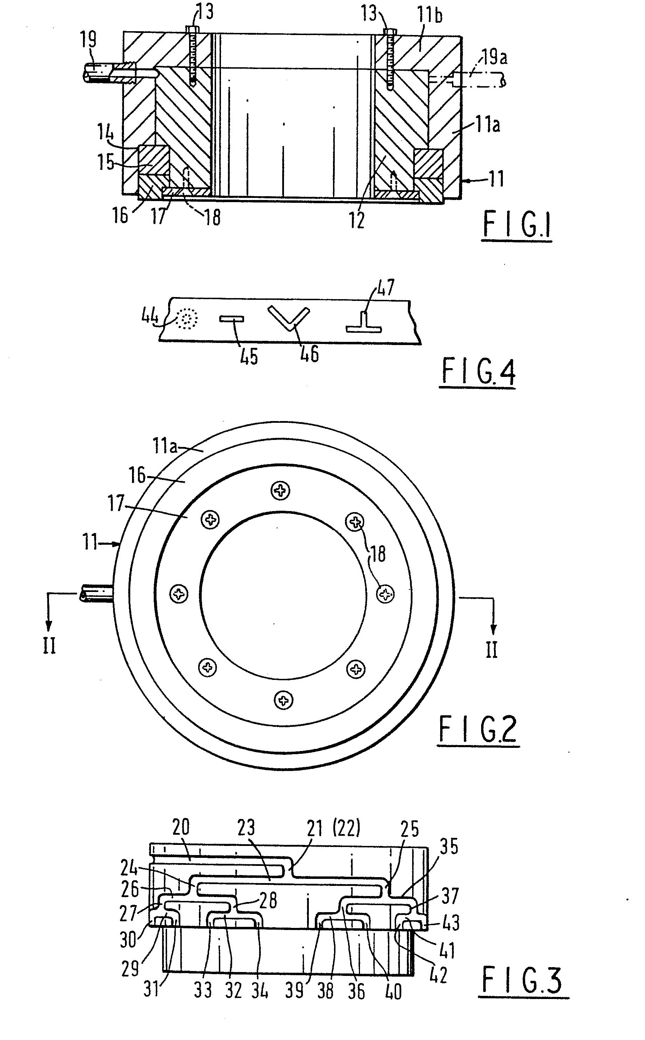

The die head illustrated in Figs. 1 and 2 generally comprise a die body 11, defined by a cylidrical part 11a with an internal flange 11b at one end thereof, and a core member 12 having an external diameter which allows the core member 12 to fit snugly into the bore of cylindrical part 11a. The internal end face of core 12 abuts the internal radial surface of flange 11b and the core member 12 is retained in die body 11 by bolts, such as the bolts 13 shown in Fig. 1. The bore of core member 12 has a diameter substantially equal to the internal diameter of the flange 11b.

Remote from flange 11b the cylindrical part 11a and the core 12 are both under-cut to form an annular recess 14 and a static mixer 15 is snugly housed in recess 14. An annular extrusion plate 16 is retained by a securing ring 17 attached to core 12 by screws 18.

As will be seen from Fig. 1 flowable material is supplied to the die head via an external connection 19 which discharges to the bore of part 11a and the material is distributed circumferentially by a duct distribution system, cut into the internal diameter of the cylindrical part 11a and/or the external diameter of the core 12, and discharged to the recess 14 so as to flow through the static mixer 15 before passing to the extrusion plate 16.

Fig. 3 shows one arrangement for a duct distribution system suitable for use with the die head of Figs. 1 and 2 and wherein said system is formed in the major external cylindrical surface of the core 12.

Said duct distribution system includes a circumferential groove 20, spaced from the end of core 12 so as to receive flowable material from external connection 19, the groove 20 opens to two diamentrically opposite axially extending grooves 21 and 22. As Fig. 3 shows a view of the core 12 at right angles to the plane II-II and, as the core 12 to one side of the plane II-II is a mirror image of the core to the other side of the plane II-II, only the duct system illustrated in Fig. 3 need be described in detail.

As axial grooves 21 and 22 are diametrically opposite, the groove 20 has a circumferential length slightly greater than 180° (the actual length is equal to 180°) of the circumference of the cyclindrical surface of core 12 plus one half the width of each of the grooves 21 and 22.

The groove 21 opens to the mid-length of a circumferential groove 23 which, in turn, opens at its end to two axially extending grooves 24 and 25, the axes of which are spaced apart some 90°. The groove 24 opens to the mid-length of a circumferential groove 26 which discharges at each of its ends to axial grooves 27 and 28, axial groove 27 opens to the mid-length of a circumferential groove 29 which, in turn, opens at its ends to axial outlet grooves 30 and 31 and, in like manner, groove 28 opens to the mid-length of a circumferential groove 32 which discharges at its ends to axial outlet grooves 33 and 34. The groove 25 opens to the mid-length of a circumferential groove 35, groove 35 opens at its ends to axial grooves 36 and 37, groove 36 opens to the mid-length of a circumferential groove 38 which opens at its end to axial outlet grooves 39 and 40 whilst the axial groove 37 opens to a circumferential groove 41 which discharges at its ends to axial outlet

grooves 42 and 43. The axial outlet grooves 30, 31, 33, 34, 39, 40, 42 and 43 all open to the radial face of core 12 partially defining the recess 14 and thus material supplied to axial groove 21 from groove 20 is released from grooves 30, 31, 33, 34, 39, 40, 42 and 43 into recess 14.

As stated hereinbefore the core 12 above the plane II-II is a mirror image of the core below the plane II-II as viewed in Fig. 2 so that the axial groove 22 supplies a "family tree" groove system, identical with the groove system 23 to 43 inclusive on the reverse side of the core 12 to that illustrated in Fig. 3, and the duct system supplied by axial groove 22 terminates with axial outlet grooves identical to grooves 30, 31, 33, 34, 39, 40, 42 and 43 opening to the radial face of core 12 partially defining recess 14.

The axial grooves 30, 31, 33, 34, 39, 40, 42 and 43 supplied by duct 21 and the equivalent axial grooves supplied by the groove 22, open at said radial face of core 12 at equally spaced apart locations circumferentially of core 12. Further as each axial groove feeding a circumferential groove opens to the mid-length of that circumferential groove, and as each circumferential groove opens to two axially extending grooves at its ends, the flow paths from the mid-length of groove 20 to the outlet of each of the axial outlet grooves 30, 31, 33, 34, 39, 40, 42 and 43, and the corresponding grooves on the opposite side of the core 12 from that illustrated in Fig. 3, are of equal length. Further, the cross-sectional areas of all the grooves in the duct distribution system are so arranged that a relatively low pressure drop is experienced between groove 20 and the outlet grooves and the outlet pressures at said axial outlet grooves, such as 30, 31, 33, 34, 39, 40, 42 and 43, are substantially the same.

Thus, with the above described arrangement the material supplied to the duct distribution system from the external connection 19 is distributed via paths of equal lengths to sixteen outlets to the recess 14, said outlets being spaced apart circumferentially, and the discharge from the said outlets is directed into the static mixer.

The mixer 15 may conveniently comprise a so-called "Sulzer" mixer such as described in British Patent specification No. 1 373 142. Alternatively the mixer 15 may be of the "Polyolefine" construction described in British Patent specification No. 2 058 653 entitled "Improvements in or Relating to Fibre Extrusion Die Heads".

The extrusion plate 16 provides openings through which the plastics material flowing from the static mixer 15 is extruded and such openings may comprise groups of small openings, such as the openings 44 (see Fig. 4) for extruding continuous filaments, slots 45 for extruding tape of rectangular section, V-slots 46 for extruding continuous angle sections, or T-slot 47 for extruding continuous T sections. To ensure uniform flow circumferentially of the extrusion plate 16 only one type of opening, bores 44, or slot 45, or angle opening 46, or "T" opening 47 will be provided in the extrusion ring 16.

Whilst the embodiment illustrated in Figs. 1 and 2, with the core member 12 such as that described in Fig. 3, proposes sixteen outlets from the duct distribution system, said outlets being spaced circumferentially, the "family tree" may be continued through one more branching of ducts to obtain thirty two outlets to the recess 14 or a stage further to obtain sixty four outlets at the recess 14, with the flow paths to the outlets again of equal length.

With a single duct distribution system, the extrusion outlets for the extrusion plate 16 will be substantially uniformly spaced apart in the circumferential direction and the pressure of the material supplied to the extrusion plate 16 will be suitable for the production of the desired articles. However, in a modified construction, a sixteen or thirty two outlet family tree supplied by the external connection 19 may be limited to one half of the cylindrical surface of the core 12, a second sixteen or thirty two outlet family tree may be provided on the other half of the cylindrical surface of core 12 and supplied with plastics material via a second external connection 19a, the annular static mixers 15 may include barriers to prevent the interchange of material supplied thereto from the two idependent family tree duct distribution systems, and the two halves of the extrusion plate 16 may have differently shaped openings so that that half of the plate 16 supplied from the family tree duct system fed by external connection 19 may produce continuous filaments whilst that half of the extrusion plate 16 supplied with material from the family tree duct fed by the external connection 19a may extrude tape, angle, T-shaped or other continuous lengths differing in cross-section and cross-sectional area from said continuous filaments.

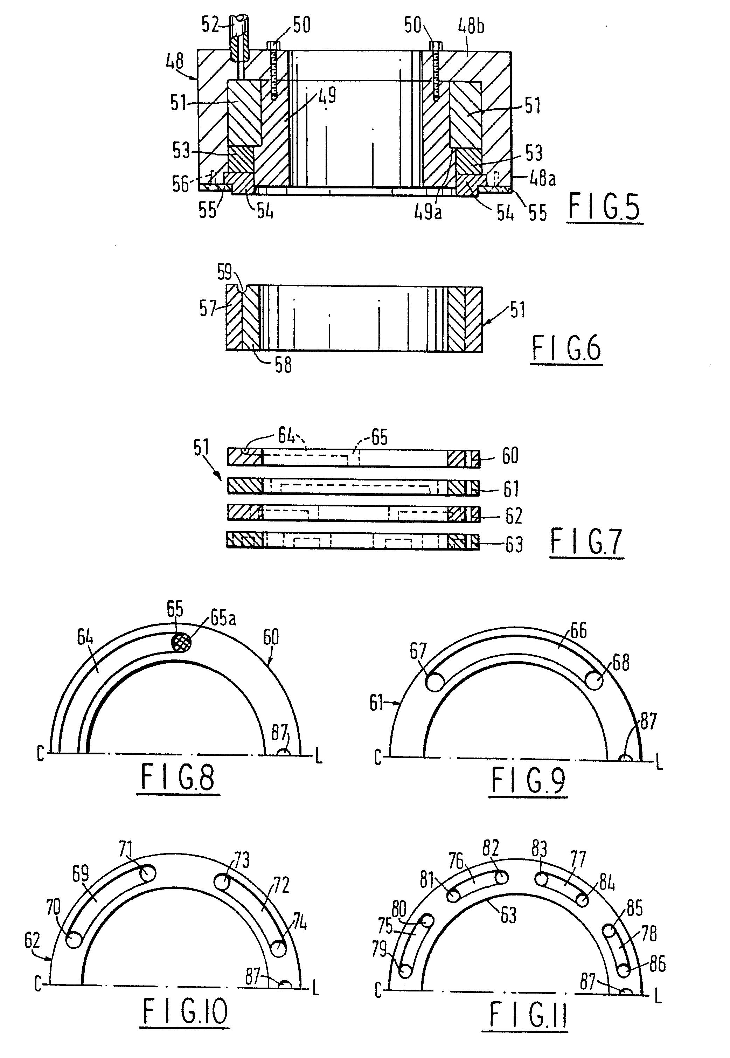

In the embodiment illustrated in Fig. 5, the die block 48 again comprises an annular wall 48a with an inwardly directed flange 48b at one end thereof and a core member 49 is secured to the flange 48b by bolts, such as the bolts 50. In this embodiment, an annular body 51 is located against the internal radial surface of flange 48b between annular wall 48a and the core 49 and annular body 51 is retained in position by a shoulder 49a presented by the core 49. The annular body 51 includes a duct distribution system, described hereinafter, arranged to receive flowable plastics material from an external connection 52 and to discharge flowable plastics material to an annular static mixer 53 located between annular wall 48a, core 49, and abutting the under-surface of the annular body 51. The static mixer 53 discharges to an extrusion plate 54 supported by an annular ring 55 attached to annular wall 48a by screws 56.

The annular body 51 may comprise, (see Fig. 6), two concentric cylindrical elements 57 and 58, the element 58 having a family tree type groove distribution system cut in its external surface, and which distribution system may be identical to the groove distribution system illustrated in Fig. 3, with the only difference being that the groove 20 in Fig. 3 is replaced by the groove 59 formed at the upper junction of cylindrical elements 57 and 58 so as to receive flowable material from the vertically disposed external connection 52. In like manner to the distribution system illustrated in Fig. 3, the distribution system in the element 58 discharges via sixteen equally spaced apart outlets directly to the static mixer 53 and, from static mixer 53, the material is extruded through openings in the extrusion plate 54.

As the support for the body 51 is provided by the shoulder 49a on core 49, the elements 57 and 58 are secured together by radial pins (not shown) to prevent relative axial displacement between said elements 57 and 58.

As in the Figs. 1 and 2 embodiment, a single family tree construction may surround the annular element 58 or alternatively, one family tree duct distribution system may be confined to one half of the cylindrical surface of cylindrical elements 58 and another duct distribution system, supplied by an external connection (not shown) may be provided on the other half of the cylindrical surface of element 58 and the two duct distribution systems may duct flowable material to two different areas of the extrusion plate so as to permit different extrusions from the two halves of the extrusion plate.

In the second construction for the annular body 51, illustrated in Figs. 7 to 11 inclusive, said body 51 comprises four annular elements 60, 61, 62 and 63 in stacked relationship, the elements 60 having an annular groove 64 in its upper surface connecting two diametrically opposite bores, one of which 65 is shown, through the element 60, the groove 64 being located to receive flowable material from the external connection 52.

The elements 60, 61, 62 and 63, are symmetrical about the centre line CL shown in Figs. 8 to 11 inclusive and thereby only that part of the duct system illustrated will be described in detail.

The bore 65 through element 60 opens to an arcuate groove 66 in the element 61 and groove 66 opens at its ends to two bores 67 and 68 through element 61. The bore 67 opens to an arcuate groove 69 in element 62 and groove 69 opens at its ends to two bores 70 and 71 through element 62. In like manner the bore 68 opens to an arcuate groove 72 in element 62 and groove 72 opens to two bores 73 and 74 through element 62.

The bore 70 opens to an arcuate groove 75 in element 63, bore 71 opens to an arcuate groove 76 in element 63, bore 73 opens to an arcuate groove 77 in element 63, bore 74 opens to an arcuate groove 77 in element 63 and said grooves 75, 76, 77 and 78, open at their ends to bores 79 and 80, 81, 82, 83 and 84, and 85 and 86 respectively.

The elements 60, 61, 62 and 63, are circumferentially located relative to one another by a pin 87 which passes through all four elements 60 to 63, and such location is effected, and the grooves and bores in the said elements are so arranged, that each said bore 65, 67, 68, 70, 71, 73 and 74 opens to the mid-length of its respective arcuate groove 66, 69, 72, 75, 76, 77 and 78. Further, the annular body 51 is so located in die head 48 that external connection 52 discharges to the mid-length of the arcuate groove 64.

Each element 60, 61, 62 and 63 below the centre line CL is a mirror image of that part above the centre line CL as viewed in Figs. 8, 9, 10 and 11, so that the plastics material supplied to arcuate groove 64 by external connection 52 is distributed through the groove and bore system and discharges from the underside of element 63 via sicteen bores such as the bores 79 to 86 inclusive, equally spaced apart circumferentially of the body 51, said material having traversed paths of equal length.

The material discharged from the bores of element 63 passes through the static mixer 53 before passing to the extrusion plate 54.

In using the stacked element arrangement, each element in the stack splits each material supply to that element into two independent discharges and thus, if the stack includes five elements,thirty two discharge bores are obtained and, in fact, any number of elements may be used to obtain a desired circumferential distribution.

In the embodiments illustrated in Figs. 5 to 11 inclusive, the die head includes only one "family tree" duct distribution system but two or more separate distribution systems, each having a material supply individual thereto, may be provided, said systems being spaced apart circumferentially and delivering their respective materials to areas of the extrusion plate individual thereto.

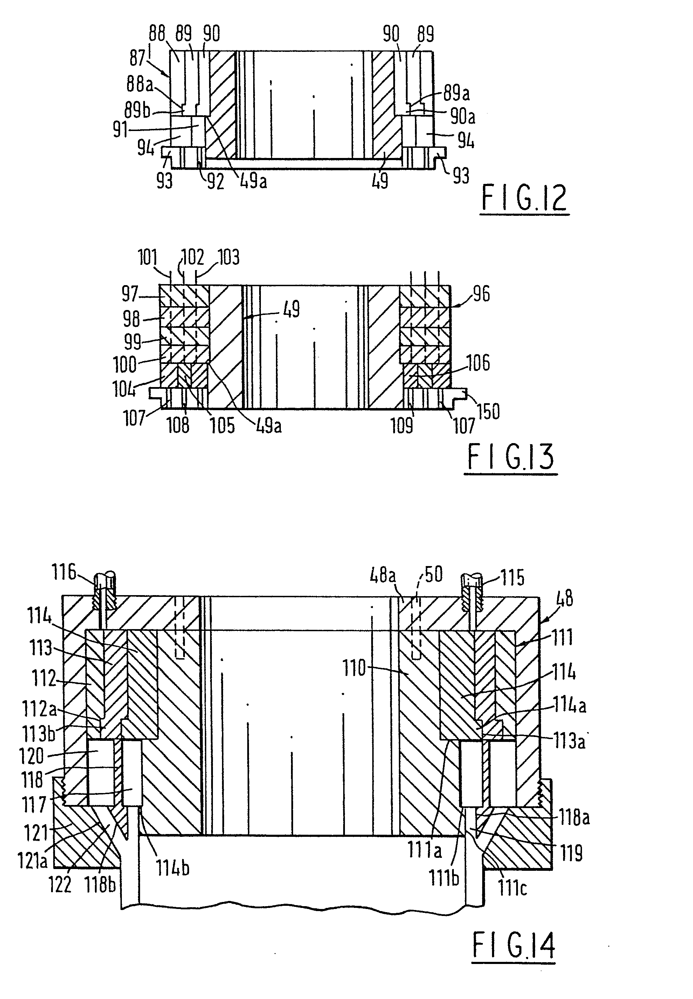

In the example illustrated in Fig. 12, for use with a die body and core member identical with the die body 48 and core member 49 of Fig. 5, an annular body, generally indicated by numeral 87', comprises three annular elements 88, 89 and 90 in close-fitting relationship. The element 90 is supported by a shoulder 49a of core 49, the element 89 is supported by a flange 90a presented by the element 90 and which engages in a recess 89a in element 89, and the element 88 is supported by a flange 89b on element 89 engaging in a recess 88a in element 88.

The elements 89 and 90 each has a family tree duct distribution system formed in its external cylindrical surface, each duct distribution system may be identical to the duct distribution system 20 to 43 illustrated in Fig. 3, and the outlet ducts for the duct distribution system in element 90 will pass without interruption through the flange 90a and the outlet ducts for the duct distribution system in element 89 will pass through the flange 89b.

The material flows from the duct distribution system formed by element 90 pass through a static mixer 91 for extrusion through openings 92 in the extrusion plate 93 whilst the material flows from the duct distribution system in element 89 pass through a static mixer 94 before extrusion through openings 95 in extrusion plate 93.

In operating the die head construction illustrated in Fig. 12, the die body (not shown) will include two plastics material supply external connections (not shown), such as the external connection 52 illustrated in Fig. 5, one of which connections will supply material to the family tree distribution system in element 90 whilst the other supply will feed the distribution system in element 89, the two materials will be distributed independently by the concentric family tree duct distribution systems formed in elements 89 and 90, and the materials from the two independent family tree duct constructions are extrided through openings individual to each system.

As with the embodiments illustrated in Figs. 1 and 5, the cylindrical elements 89 and 90 may each have more than one family tree formed therein, the family trees being spaced apart in the circumferential direction of the respective element, and each family tree will have a material supply individual thereto, a static mixer, or part of a static mixer, individual thereto, and the material from each family tree duct distribution system will extrude through openings in the extrusion plate individual thereto.

The die head construction illustrated in Fig. 13 may, in identical manner to the Fig. 12 embodiment, be incorporated in a die body including a core member identical to the die body 48 and core member 49 illustrated in Fig. 5. In the Fig. 13 construction the annular body, generally indicated by reference numeral 96, is defined by four annular elements 97, 98, 99 and 100 in stacked relationship and the annular body 96 is again supported by a shoulder 49a presented by core member 49.

The elements 97, 98, 99 and 100 have three sets of arcuate grooves and bores, each set being identical to the grooves and bores 64 to 86 shown in Fig. 7 to 11 inclusive forming a family tree duct distribution system, the three sets being concentric so that the outer family tree duct distribution system has a mean diameter generally identified by nemeral 101, the intermediate family tree system has a mean diameter generally indicated by numeral 102 and the inner family tree system has a mean diameter generally indicated by numeral 103, the three systems being independent of one another and each providing material outlets equally spaced apart circumferentially of its respective mean diameter.

The three family tree duct distribution systems based on diameters 101, 102 and 103 discharge to separate concentric static mixers 104, 105 and 106 respectively from which the material passes to concentrically separated extrusion openings 107, 108 and 109 respectively in extrusion plate 150.

Thus, with the arrangement illustrated in Fig. 13 three independent material flows are provided and the three independent syatems may process and extrude materials differing in composition, pressure and/or extruded cross-section.

Further, and as with the embodiment illustrated in Figs. 7 to 11 inclusive, more than one family tree construction may be provided at each mean diameter 101, 102 and 103, said family tree systems being spaced apart circumferentially, and each family tree may be provided with a material supply, section of static mixer, and area or areas of extrusion plate individual thereto.

In the embodiment illustrated in Fig. 14, for making tubular articles comprising two concentric layers of material, a die body 48 identical to the die body 48 of Fig. 5, has a core member concentrically secured therein as by bolts 50 in Fig. 5. An annular body, generally indicated by numeral 111 and comprising three concentric elements 112, 113 and 114 identical to the elements 88, 89 and 90 of Fig. 12, locates between the inner cylindrical wall of the die body 48 and the core member 110, the upper radial end face of the annular body 111 abutting the internal radial face of the flange 48b of die body 48.

As with the Fig. 12 embodiment the inner annular element 114 is supported by a shoulder 111a formed on the core member 110 and said element 114 presents a flange 114a engaged in a recess 113a in element 113 and element 113 presents a flange 113b engaged in a recess 112a in element 112 so that the elements 112, 113 and 114 are fully supported against axial displacement within the die body 48.

The element 114 has a family tree duct distribution system formed in its external cylindrical surface, said family tree duct distribution system being supplied with plastics material via an external connection 115, and the element 113 also has a family tree duct distribution system in its external cylindrical surface, arranged at 180° to the duct distribution system in element 114 so that the duct system in element 113 can be supplied with plastics material via an external connection 116 diametrically opposite to the external connection 115.

The family tree type duct distribution system formed in element 114 discharges to a static mixer 117 which has an annular member 118 secured to its external cylindrical face, the static mixer 117 is axially supported by a second shoulder 114b presented by the core member 114 and below the static mixer 117 (as viewed in Fig. 14) and the annular member 118 presents an internal cylindrical surface 118a concentric with the external cylindrical surface 111c of the core member 114 below mixer 117 (as viewed in Fig. 14). The said internal cylindrical surface 118a and external cylindrical surface 111c define therebetween an annular extrusion opening 119 through which the material from the mixer 117 is extruded in tubular form.

The duct distribution system in element 113 discharges to a static mixer 120 surrounding the annular member 118, mixer 120 is axially retained by an annular cap 121 screwed onto die body 48, and the annular cap 121 presents an internal conical surface 121a and the annular member 118 presents an external conical surface 118b, said conical surfaces 121a and 118b defining therebetween an extrusion opening 122 for ducting the material from mixer 120 to form an annular layer of plastics material surrounding the tube extruded from the extrusion opening 119.

In operation, a plastics material supplied by external connection 115 passes through the family tree duct distribution system formed in element 114 and the material discharges from said system at a plurality of points equally spaced apart in the circumferential direction, the material having traversed paths of equal length, and said material flows through the static mixer 117, wherein the material is mixed to smooth out local variations in the material. The material from mixer 117, of uniform characteristics, is extruded from the annular extrusion opening 119 in tubular form. In like manner the material supplied by external connection 116 is distributed by the family tree duct distribution system in element 113 the material passes through static mixer 120 to issue therefrom as a material of substantially uniform characteristics, and said material flows through the extrusion slot 122 to form an annular layer surrounding the tubular extrusion issuing from the opening 119.

The material supplied by external connection 115 may differ from that supplied by external connection 116 so that the two concentric layers forming the extruded tube can be of different materials.

Further, by providing more than three elements in the annular body, with family tree duct dictribution systems in each element, and a mixer and extrusion opening for each distribution system, tubular extrusions of different concentric materials can be obtained.

An annular die head as proposed by the present invention has no "ends" and as such the die head can be maintained at a controlled temperature far easier than in the case of an elongate. die head. Further, the annular die head is not limited to size as is the elongate die head and any number of family tree duct distribution systems may be provided in the same die head and spaced apart circumferentially and/or concentrically so that very high production rates, including the simultaneous manufacture of different articles, can be achieved.

Further, the "width" of the annular die head is the diameter of the head and thus, for a plant of given processing width an annular die plate offers an effective extrusion length $\pi$ x the length of a conventional elongate die head for the plant.

As well as the static mixers adjacent the extrusion plates the duct distribution system may advantageously include static mixers in selected ducts, such as the axially extending bores of the Fig. 7 to 11 embodiment, Fig. 8 shows one such mixer 65a in bore 65, and such mixers can greatly assist in the maintaining relatively uniform material conditions in passage through said duct system.

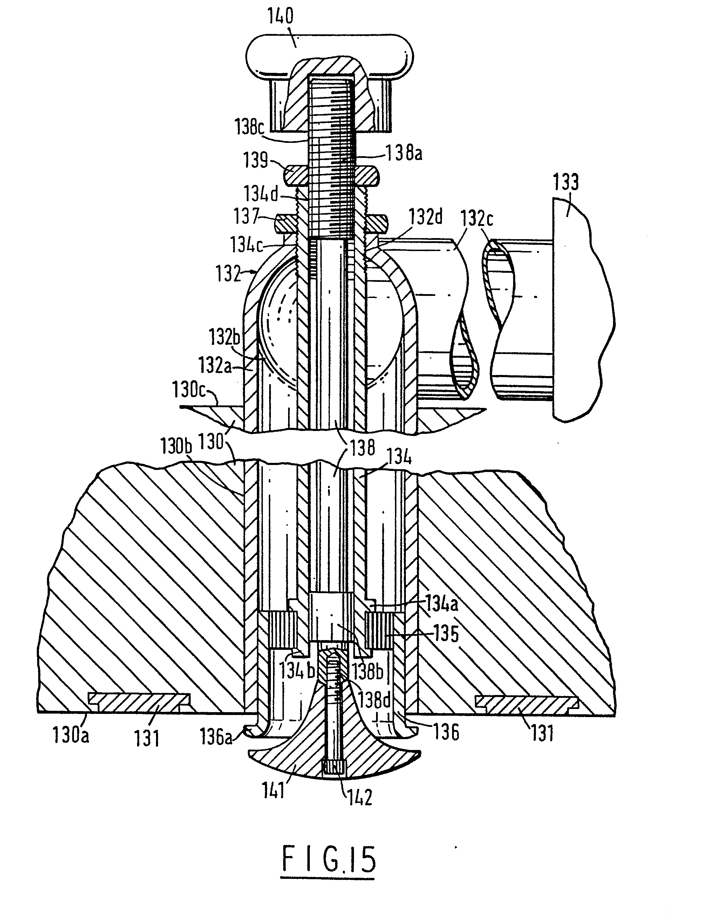

In the extrusion of many products, particularly products of small cross-section, it is the practice to direct a stream of cooling air onto the product as it issues from the die plate and one arrangement for providing such cooling air streams for an annular die plate is illustrated in Fig. 15.

In the example illustrated in Fig. 15 an annular die head 130, which may be identical with the die head illustrated in any of the preceding examples, presents an extrusion plate 131 at its radial face 130a and a section 132a of an air duct 132 is entered in the bore 130b of the die head 130 and terminates at one end substantially in the plane of the radial face 130a. The section 132a is a neat fit in the bore 130b so as to lie concentric with the axis of the die head 130.

Remote from the die head 130, the duct 132 is bent through a right angle so that its axis lies parallel to faces 130a, 130c. of the die head 130, defining a section 132b, and which section 132b is supplied with cooling air from a supply source, generally indicated by numeral 133, via a duct section 132c.

A sleeve 134 extends through the duct section 132a, concentric therewith, and a spider 135 is rotatably secured on the lower regions of the sleeve 134 between flanges 134a and 134b of sleeve 134. The flange 134b may conveniently be replaced by a nut locked on an external thread on the lower regions of the sleeve 134.

The spider 135 supports a generally cylindrical sleeve member 136, a neat sliding fit in the bore of section 132a, and the lower regions of the member 136 outwardly of the bore of section 132a are turned outwardly to define a radial flange 136a.

The upper regions of the sleeve 134 (as viewed in Fig. 15), are externally threaded as indicated by numeral 134c and the threaded part 134c passes through a threaded bore 132d in the elbow connecting the sections 132a and 132b and concentric with the axis of section 132a so that, by rotation, the axial position of the sleeve 134 and thereby the axial positions of the spider 135 and cylindrical member 136 can be adjusted to adjust the position of flange 136a relative to the plane of the face 130a of the die head. A locking nut 137 on the thread 134c outwardly of the duct 132 serves to secure the sleeve 134 in any desired axial position relative to duct 132 and, thereby the die head 130.

A spindle 138 with two enlarged diameter regions 138a and 138b is located within sleeve 134, the lowermost enlarged diameter region 138a is a sliding fit in the base of sleeve 134 and the upper enlarged diameter region 138b is externally threaded as at 138c and engaged in an internal thread 134d in the upper regions of the sleeve 134. The uppermost regions of the spindle 138 extend outwardly from the sleeve 134, a lock nut 139 is engaged on the thread 138c and is engageable against the upper end of sleeve 134, and at its external upper end (as viewed in Fig. 15) the spindle 138 has a handwheel 140 secured thereon.

The lower regions of the spindle 138 includes an axial threaded bore 138d and a shaped element 141 is secured to the lower end of spindle 138 by a screw 142 engaged in the threaded bore 138d.

The arrangement described above operates as follows:-

With the locknut 137 locking sleeve 134 relative to the duct 132 and with the locknut 139 locking the spindle 138 relative to sleeve 134 cooling air from supply source 133 can flow along sections 132c, 132b and 132a of duct 132, and past the spider 135 for release through the passage defined between the under radial face of flange 136a (as viewed in Fig. 15) and the upper shaped surface of element 141, said faces directing the air streams towards the extrusion plate 131 to effectively cool the extrusion issuing therefrom.

When an adjustment of the airstreams directed towards the extrusion plate 131 is required it is only necessary to release the locknut 137 and, by rotating the handwheel 140, rotate the assembly 134 and 141, the engagement of the threads 134c and 132d translating the rotational movement into axial displacement of the assembly and, thereby, adjusting the position of the flange 136a relative to the face 130a of the die head 130.

When an adjustment of the gap between flange 136a and element 141 is required it is only necessary to release the locknut 139 and rotate the hand wheel 140, the rotation of the handwheel 140 and spindle 138 is translated by the screw threads 138c and 134d into axial displacement of the assembly 138 - 142 - so that the element 141 is displaced towards or away from the flange 136a, dependent upon the direction of rotation of the spindle 138.

Thus, by this construction, the position of the air releasing means and the gap between flange 136a and the element 141 can be adjusted without stopping the extrusion process.

It will be appreciated that in all the foregoing examples the die head will be provided with heating means, the annular form of the die head will allow the die head to be maintained at a more uniform and constant temperature than conventional elongate die heads, but as such heating of die heads can be performed by a number of different well known systems no detailed description thereof is necessary.

CLAIMS.

1. An annular extrusion die head including an inlet for receiving a continuous supply of plastics material to be extruded, and a duct distribution system for directing said material from said inlet to an extrusion outlet or outlets of the head, characterised in that the duct distribution system (21 to 43 or 64 to 86) is arranged to direct said plastics material supplied to said inlet to spaced apart locations adjacent said outlet or outlets (44, 45, 46 or 47) via paths of substantially equal lengths.

2. An annular extrusion die head according to claim 1, comprising an annular die body (48), an annular core (49,110) within said die body and an annular body (51, 87, 96, 111) between said die body and said core and concentric with the axis of the die head, and an annular extrusion device (54;83;150;111c-118a;121a-118b) defining an extrusion opening or openings (44,45,46 or 47;92,94; 107-109; 119-122) the openings being individually spaced apart circumferentially of the extrusion device or groups of openings being spaced apart circumferentially of said extrusion device, a duct distribution system (20-43; 64 to 86) defined by said annular body, a supply duct (52; 115, 116) for supplying plastics material to be extruded to said duct distribution system, and wherein said duct distribution system is arranged to duct material supplied by said supply duct to spaced apart locations adjacent said extrusion device via paths of substantially equal length.

3. An annular extrusion die head according to claim 1, wherein the die head comprises an annular die body (11a) with an annular core (12) supported therein, and wherein the said duct distributuion system is formed in a cylindrical internal surface of the die block contacting a cylindrical external surface of the core, or in a cylindrical external surface of the said annular core contacting an internal surface of the die blocks, or partially in said cylindrical surface of the die block and partially in said cylindrical surface of said core.

4. An annular extrusion die head as claimed in claim 1 or 2 or 3 and wherein two or more of the duct distributuion systems are provided and each duct distribution system supplies plastics material from a supply (19, 19a; 11,116) individual to that system to an outlet or outlets individual to that system.

5. An annular extrusion die head according to claim 1, 2, 3 or 4 and wherein said duct distribution system comprises ducts(21,22, 24, 25, 27, 28, 30, 33, 34, 36, 37, 39, 40, 42, 43; 65, 67, 68, 70, 71, 73, 74, 79, 80, 81, 82, 83; 84, 85, 86) extending generally in the axial direction of the die head and ducts (20, 23, 26, 29, 32, 35, 38, 41; 64, 66, 69, 72 and 75-78) extending generally in the circumferential direction of the die head and wherein each axially extending duct receives plastics material to be ducted at an upstream end thereof and discharges such material to the mid-regions of a circumferential duct individual thereto and each circumferential duct discharges material supplied thereto to two axially extending ducts individual thereto and open to respective end regions of the circumferential duct and whereby the number of axially extending ducts is doubled past each stage of circumferential ducts.

6. An annular extrusion die head according to any of the preceding claims and wherein the duct distribution system discharges plastics material to' or incorporates an annular static mixer (15; 53; 65a; 91, 94; 104, 105, 106; 117, 118) before passage of the material to the extrusion outlet or outlets of the die head.

7. An annular extrusion die head according to claim 2 or any of claims 4 to 6 as dependent thereon and wherein said annular body comprises a plurality of concentric cylindrical elements (57, 58; 88-90; 112-114), with their adjacent cylindrical surfaces in contacting relationship and wherein a duct distribution system is formed in the internal cylindrical surface of the or each cylindrical element contacting an external cylindrical surface of an adjacent cylindrical element or the external cylindrical surface of each cylindrical element contacting an internal cylindrical surface of an adjacent cylindrical element; and a plastics material supply duct individual to each duct distribution system.

8. An annular extrusion die head according to claim 7, wherein duct distribution systems are provided at different radii with respect to the axis of the die head.

9. Am annular extrusion die head according to claim 2 or any of claims 4 to 6 as dependent thereon and wherein said annular body comprises a plurality of annular elements (60-63; 97-100) in axially stacked relationship and said duct distribution system is defined by ducts (65, 67, 68, 70, 71, 73, 74 and 79-86) passing in the axial direction of each element and circumferentially extending ducts (64, 66, 69, 72, 75-78) formed in one or the other, or both, contacting radial faces of the elements, the axially extending ducts and circumferentially extending ducts being so arranged that, in the direction of flow of the plastics material, each axially extending duct discharges into the mid-length regions of a circumferentially extending duct individual thereto and each circumferentially extending duct discharges to two axially extending ducts individual thereto and opening to respective end regions of the circumferential duct.

10. An annular extrusion die head according to any of the preceding claims and wherein the die head defines a plural -ity of single, continuous outlets (119, 122), concentric with the axis of the die head, and spaced apart in the radial direction of the die head, each outlet is supplied with plastics material via one or more of the duct distributuion systems individual thereto, and wherein the plastics material is extruded as a plurality of concentric tubes capable of bonding together to form concentric layers of a tubular element.

11. An annular extrusion die head according to any of the preceding claims including means (132, 133-142) for ducting cooling air through the central opening through the die head and for directing said cooling air towards the extrusion openings from the die head.

0091235

1/4

FIG.1

FIG.4

FIG.2

FIG.3

FIG.5

FIG.6

FIG.7

FIG.8

FIG.9

FIG.10

FIG.11

0091235

3/4

FIG.12

FIG.13

FIG.14

F I G. 15